# FASCICULE DE BREVET EUROPEEN

(11) **EP 2 181 373 B1**
(45) Date de publication et mention de la délivrance du brevet: **20.05.2015**
(21) Numéro de dépôt: 08830346.6
(22) Date de dépôt: 07.07.2008
(51) Int. Cl.: G05B 23/02, G05B 9/02, F02K 1/76

(54) **SYSTÈME DE COMMANDE D'AU MOINS UN ACTIONNEUR DE CAPOTS D'UN INVERSEUR DE POUSSÉE POUR TURBORÉACTEUR**
SYSTEM ZUR STEUERUNG MINDESTENS EINES AKTUATORS FÜR DIE COWLINGS EINES TURBOSTRAHLMOTOR-SCHUBUMKEHRERS
SYSTEM FOR CONTROLLING AT LEAST ONE ACTUATOR FOR THE COWLINGS OF A TURBOJET ENGINE THRUST REVERSER

(30) Priorité: 20.08.2007 FR 0705925
(43) Date de publication de la demande: 05.05.2010
(73) Titulaire: Aircelle, 76700 Gonfreville l'Orcher (FR)
(72) Inventeur: MAALIOUNE, Hakim, F-78630 Orgeval (FR)
(74) Mandataire: Verriest, Philippe
(86) Numéro de dépôt international: PCT/FR2008/000979
(87) Numéro de publication internationale: WO 2009/034247

(56) Documents cités:
- EP-A- 0 843 089
- FR-A- 2 872 223
- US-A1- 2003 204 777
- SPEE R ET AL: "REMEDIAL STRATEGIES FOR BRUSHLESS DC DRIVE FAILURES" IEEE TRANSACTIONS ON INDUSTRY APPLICATIONS, IEEE SERVICE CENTER, PISCATAWAY, NJ, US, vol. 26, no. 2, 1 mars 1990 (1990-03-01), pages 259-266, XP000136699 ISSN: 0093-9994
- FRANK A DEWINTER F A ET AL: "Presenting DESIGN TOOLS that can be used to improve both RELIABILITY and REPAIR TIME" IEEE INDUSTRY APPLICATIONS MAGAZINE, IEEE SERVICE CENTER, PISCATAWAY, NJ, US, vol. 8, no. 4, 1 juillet 2002 (2002-07-01), pages 66-75, XP011093325 ISSN: 1077-2618

## Description

La présente invention se rapporte à un système de commande d'au moins un actionneur de capots d'un inverseur de poussée pour turboréacteur.

Le rôle d'un inverseur de poussée lors de l'atterrissage d'un avion est d'améliorer la capacité de freinage d'un avion en redirigeant vers l'avant au moins une partie de la poussée générée par le turboréacteur. Dans cette phase, l'inverseur obstrue la tuyère d'éjection des gaz et dirige le flux d'éjection du moteur vers l'avant de la nacelle, générant de ce fait une contre-poussée qui vient s'ajouter au freinage des roues de l'avion.

Les moyens mis en oeuvre pour réaliser cette réorientation du flux varient suivant le type d'inverseur. Cependant, dans tous les cas, la structure d'un inverseur comprend des capots mobiles déplaçables entre, d'une part, une position déployée dans laquelle ils ouvrent dans la nacelle un passage destiné au flux dévié, et d'autre part, une position d'escamotage dans laquelle ils ferment ce passage. Ces capots mobiles peuvent en outre remplir une fonction de déviation ou simplement d'activation d'autres moyens de déviation.

Dans les inverseurs à grilles, par exemple, les capots mobiles coulissent le long de rails de manière à ce qu'en reculant lors de la phase d'ouverture, ils découvrent des grilles d'aubes de déviation disposées dans l'épaisseur de la nacelle. Un système de bielles relie ce capot mobile à des portes de blocage qui se déploient à l'intérieur du canal d'éjection et bloquent la sortie en flux direct. Dans les inverseurs à portes, en revanche, chaque capot mobile pivote de manière à venir bloquer le flux et le dévier et est donc actif dans cette réorientation.

De manière générale, ces capots mobiles sont actionnés par des vérins hydrauliques ou pneumatiques qui nécessitent un réseau de transport d'un fluide sous pression. Ce fluide sous pression est classiquement obtenu soit par piquage d'air sur le turboréacteur dans le cas d'un système pneumatique, soit par prélèvement sur le circuit hydraulique de l'avion. De tels systèmes requièrent une maintenance importante car la moindre fuite dans le réseau hydraulique ou pneumatique peut être difficilement détectable et risque d'avoir des conséquences dommageables tant sur l'inverse que sur d'autres parties de la nacelle. Par ailleurs, en raison de l'espace réduit disponible dans le cadre avant de l'inverseur, la mise en place et la protection d'un tel circuit sont particulièrement délicates et encombrantes.

Pour pallier les divers inconvénients liés aux systèmes pneumatiques et hydrauliques, les constructeurs d'inverseurs de poussée ont cherché à les remplacer et à équiper au maximum leurs inverseurs d'actionneurs électromécaniques, plus légers et plus fiables. Un tel inverseur est décrit dans le document EP 0 843 089.

Cependant, les actionneurs électromécaniques présentent également plusieurs inconvénients qu'il est nécessaire de résoudre pour profiter pleinement des avantages qu'ils apportent en termes de gain de masse et d'encombrement.

En particulier, les actionneurs électromécaniques nécessitent l'utilisation d'un système de commande complet comprenant les actionneurs, un moteur électrique agencé pour entraîner les actionneurs, et des moyens de commande du moteur et des actionneurs comprenant un circuit électrique comportant des composants de puissance et de contrôle, ces composants pouvant présenter des pannes.

Il est d'usage en cas de panne de l'un des composants de ce circuit électrique de rendre le système de commande indisponible afin d'éviter une surchauffe trop importante de ce composant qui pourrait provoquer une explosion due à la présence de vapeurs explosives dans la nacelle, ou provoquer l'endommagement de composants voisins par echauffement.

La panne de l'un des composants du circuit électrique a souvent pour conséquence une augmentation de l'intensité du courant traversant le circuit électrique.

Ainsi, l'intégration d'un disjoncteur dans le circuit électrique permet de détecter une panne de l'un des composants du circuit et de rendre le système de commande indisponible lorsque l'intensité traversant le circuit électrique dépasse une valeur de seuil prédéterminée.

Toutefois, l'utilisation d'un disjoncteur ne permet pas de détecter l'ensemble des pannes des composants du circuit électrique. En effet, les pannes de certains composants n'ont aucune influence ou une influence limitée sur l'intensité du courant traversant le circuit électrique.

Le document US 2003/0204777 décrit également un système de commande selon l'art antérieur.

La présente invention a pour objet d'améliorer la protection d'un ensemble propulsif comprenant une nacelle et un turboréacteur contre les risques liés aux pannes du système de commande d'au moins un actionneur.

La présente invention a donc pour but de résoudre cet inconvénient.

A cet effet, la présente invention concerne un système de commande d'au moins un actionneur de capots d'un inverseur de poussée pour turboréacteur d'un aéronef comprenant :
a) au moins un actionneur de capot entraîné par au moins un moteur électrique,
b) un circuit électrique comprenant :
   b1) un étage de puissance,
   b2) des moyens de commande du moteur électrique comprennent un contrôleur étant relié par des moyens de communication au système de commande de l'aéronef,
   b3) une pluralité de moyens de mesure agencés pour mesurer respectivement une grandeur caractéristique d'un composant électrique ou d'un groupe de composants électriques du circuit électrique,
   b4) des moyens de détection d'une panne agencés pour détecter une panne au niveau d'un composant du circuit électrique lorsque la grandeur caractéristique mesurée relative à ce composant dépasse une valeur prédéterminée ou appartient à une gamme de valeurs prédéterminée, et
   b5) des moyens d'isolation de panne agencés pour inhiber le fonctionnement du composant ou du groupe de composants dans lequel une panne a été détectée afin de réduire les courants de commande en sortie du circuit électrique.

En positionnant les moyens de mesure au niveau des composants les plus susceptibles de présenter des pannes, il est possible à l'aide des moyens de détection de détecter d'éventuelles pannes de l'ensemble de ces composants.

Ainsi, le système de commande selon l'invention permet de protéger le turboréacteur contre les risques d'explosion.

Ces dispositions permettent d'inhiber uniquement le fonctionnement du composant ou du groupe de composants dans lequel une panne a été détectée et donc de maintenir le fonctionnement des autres composants du système de commande.

De plus, selon ces dispositions, la panne de ce composant ou de ce groupe de composants est isolée automatiquement, c'est-à-dire sans l'intervention de l'utilisateur, ce qui permet d'améliorer encore la sécurité du système de commande.

De préférence, les moyens d'isolation de panne sont intégrés au contrôleur.

Selon encore un autre mode de réalisation de l'invention, le système de commande comprend des moyens de communication entre les moyens de commande et un système de commande de l'aéronef, les moyens de communication étant agencés pour communiquer à un utilisateur la présence d'une panne au niveau d'un composant du circuit électrique.

De préférence, les moyens de communication sont agencés pour recevoir une commande d'inhibition du système de commande provenant de l'utilisateur.

Ainsi, l'utilisateur peut inhiber le système de commande s'il considère que la panne détectée le nécessite.

De plus, cette structure des moyens de communication permet de ne pas doter le système de commande d'un disjoncteur mais d'utiliser un disjoncteur disposé dans l'avion en amont du système de commande. Cette disposition permet d'obtenir un gain de poids mais également d'éviter une inhibition non souhaitée du système de commande du fait d'un déclenchement inopiné du disjoncteur.

Avantageusement, le circuit électrique comprend au moins un capteur de mesure de température agencé pour mesurer la température d'un composant du circuit électrique.

De préférence, le circuit électrique comprend au moins un capteur de mesure de tension agencé pour mesurer la tension aux bornes d'un composant du circuit électrique.

Selon un mode de réalisation de l'invention, le circuit électrique comprend au moins un capteur de mesure d'intensité agencé pour mesurer l'intensité traversant un composant du circuit électrique.

Selon un mode de réalisation de l'invention, les moyens de commande comportent des moyens de commande de la puissance d'alimentation du moteur auxquels sont associés des moyens de mesure d'au moins une grandeur caractéristique de leur fonctionnement

De toute façon l'invention sera bien comprise à l'aide de la description qui suit en référence au dessin schématique annexé représentant, à titre d'exemple non limitatif, une forme d'exécution de ce système de commande.
La figure 1 est une vue schématique partielle en perspective d'une nacelle intégrant un inverseur de poussée à grille.
La figure 2 est une représentation schématique des capots mobiles et de leur système d'actionnement.
La figure 3 est une représentation schématique du système de commande des actionneurs des capots mobiles.

Avant de décrire en détail un mode de réalisation de l'invention, il est important de préciser que le système décrit n'est pas limité à un type d'inverseur en particulier. Bien qu'illustrée par un inverseur à grilles, l'invention pourra être mise en oeuvre avec des inverseurs de conception différentes, notamment à portes.

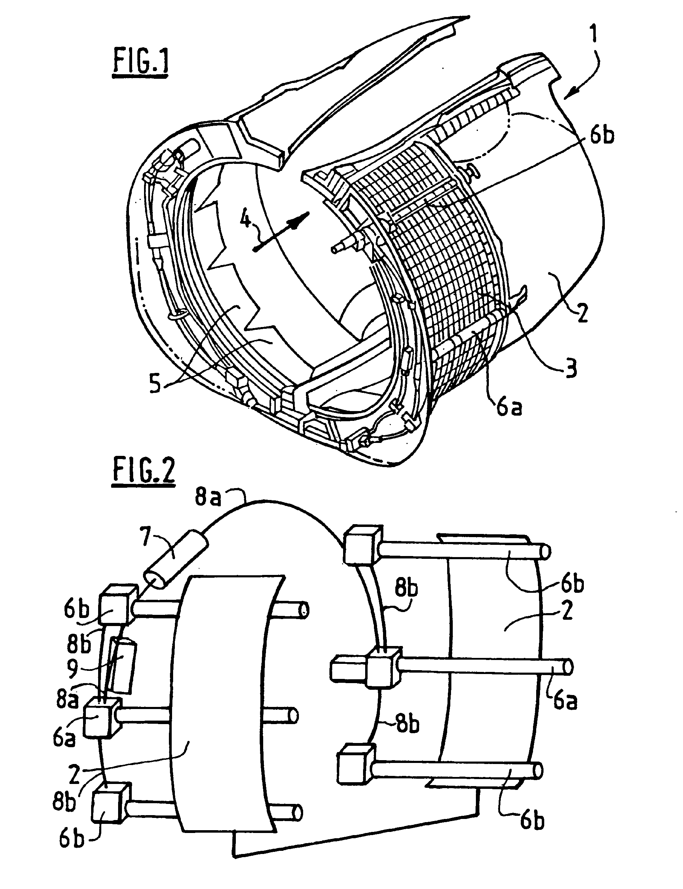

La figure 1 présente une vue schématique partielle d'une nacelle intégrant un inverseur de poussée 1. Le turboréacteur n'est pas représenté. Cet inverseur de poussée 1 possède une structure comprenant deux capots mobiles 2 semi-circulaires susceptibles de coulisser pour découvrir des grilles 3 d'aubes de déviation placées entre les capots mobiles 2 et une section de passage du flux d'air 4 à dévier. Des portes de blocage 5 sont disposées à l'intérieur de la structure de manière à pouvoir pivoter et passer d'une position dans laquelle elles ne gênent pas le passage du flux d'air 4 à une position dans laquelle elles bloquent ce passage. Afin de coordonner l'ouverture des capots mobiles 2 avec une position obturante des portes de blocage 5, celles-ci sont mécaniquement reliées au capot mobile 2 par des charnières et à la structure fixe par un système de bielles (non représentées).

Le déplacement des capots mobiles 2 le long de l'extérieur de la structure est assurée par un ensemble de vérins 6a, 6b montés sur un cadre avant à l'intérieur duquel sont logés un moteur électrique 7 et des arbres flexibles de transmission 8a, 8b respectivement connectés aux vérins 6a, 6b pour les actionner.

Le système d'actionnement des capots mobiles 2 est représenté seul à la figure 2. Chaque capot mobile 2 peut être translaté sous l'action de trois vérins 6a, 6b, comprenant un vérin central 6a et deux vérins additionnels 6b, actionnés par un unique moteur électrique 7 relié à des moyens de commande 9, comprenant un microcontrôleur. La puissance délivrée par le moteur électrique 7 est tout d'abord distribuée aux vérins centraux 6a par l'intermédiaire de deux arbres de transmission flexibles 8a, puis aux vérins additionnels 6b par des arbres de transmission flexibles 8b.

Selon une variante non représentée, seuls deux vérins haut et bas sont utilisés pour chaque capot, actionnés par un moteur électrique unique relié à une interface de commande. La puissance délivrée par le moteur électrique est distribuée aux deux vérins haut et bas par l'intermédiaire de deux arbres de transmission flexibles 8a.

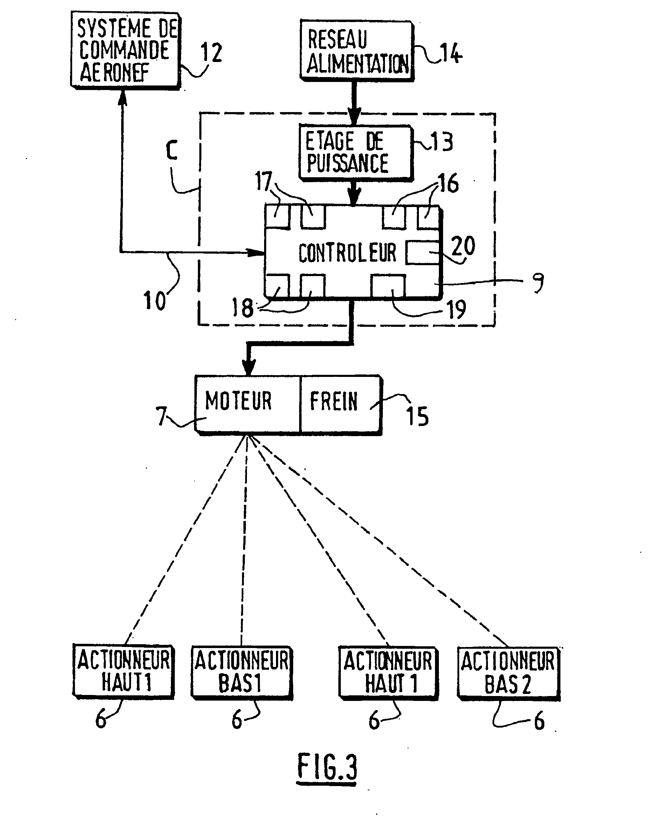

La figure 3 montre schématiquement un système de commande de l'actionnement de deux capots avec pour chaque capot deux actionneurs haut et bas.

Ainsi que représenté sur la figure 3 un système de commande des actionneurs d'un inverseur de poussée selon l'invention comprend des moyens de commande du moteur électrique 7 constitués par un microcontrôleur 9.

Ce microcontrôleur 9 est relié par des moyens de communication 10 au système de commande 12 de l'aéronef.

Le système de commande comprend également un étage de puissance 13 relié au réseau d'alimentation 14 de l'aéronef, l'étage de puissance comprenant une résistance de charge parasite (PLR), un autotransformateur et un redresseur constituant des points chauds susceptibles de présenter des pannes.

Le microcontrôleur 9 permet la commande d'un moteur électrique 7 et des vérins ou actionneurs 6 comme décrit précédemment. Le moteur comporte également un frein 15 commandé également par le microcontrôleur 9.

Le système de commande comporte un circuit électrique C ménagé sur une ou plusieurs cartes électroniques et comprenant :
- le microcontrôleur 9,
- l'étage de puissance 13,
- plusieurs composants électriques
- une pluralité de capteurs de mesure de température 16 disposés sur le microcontrôleur et agencés pour mesurer respectivement la température d'un composant électrique ou d'un groupe de composants électriques du circuit électrique,
- une pluralité de capteurs de mesure de tension 17 disposés sur le microcontrôleur et agencés pour mesurer respectivement la tension aux bornes d'un composant électrique ou d'un groupe de composants électriques du circuit électrique,
- une pluralité de capteurs de mesure d'intensité 18 disposés sur le microcontrôleur et agencés pour mesurer respectivement l'intensité du courant traversant un composant électrique ou d'un groupe de composants électriques du circuit électrique,
- des moyens de détection d'une panne 19 agencés pour détecter une panne au niveau d'un composant du circuit électrique lorsque la grandeur caractéristique mesurée relative à ce composant dépasse une valeur prédéterminée ou appartient à une gamme de valeurs prédéterminée,
- des moyens d'isolation de panne 20 agencés pour inhiber le fonctionnement du composant ou du groupe de composants dans lequel une panne a été détectée.

Le circuit électrique C comprend de plus un onduleur commandé par des IGBT au niveau du microcontrôleur 9.

Ces IGBT constituent un mode de réalisation de moyens de commande de la puissance d'alimentation du moteur. Ces moyens de commande de la puissance d'alimentation du moteur constituent des points chauds susceptibles de présenter des pannes.

Le circuit électrique C comprend également un IGBT de la PLR au niveau du microcontrôleur 9.

Le circuit électrique C comprend en outre des moyens de mesure (non représentés sur les figures) disposés sur le microcontrôleur et sur l'étage de puissance et agencés pour mesurer respectivement une grandeur caractéristique de la PLR, de l'autotransformateur, du redresseur, des IGBT de l'onduleur, et de l'IGBT de la PLR.

Le système de commande comprend également des moyens de communication 10 entre les moyens de commande et un système de commande de l'aéronef, les moyens de communication étant agencés d'une part pour communiquer à un utilisateur la présence d'une panne au niveau d'un composant du circuit électrique, et d'autre part pour recevoir une commande d'inhibition du système de commande provenant de l'utilisateur.

De ce fait, l'utilisateur est toujours averti de la présence d'une panne dans le contrôleur et peut inhiber l'ensemble du système de commande s'il considère que cette panne le nécessite.

## Revendications

1. Système de commande d'au moins un actionneur (6) de capots (2) d'un inverseur de poussée pour turboréacteur d'un aéronef comprenant :
a) au moins un actionneur (6) de capot (2) entraîné par au moins un moteur électrique (7),
b) un circuit électrique (C) comprenant :
b1) un étage de puissance (13), b2) des moyens de commande du moteur électrique (7) comprenant un contrôleur (9) étant relié par des moyens de communication (10) au système de commande (12) de l'aéronef,
b3) une pluralité de moyens de mesure (16-18) agencés pour mesurer respectivement une grandeur caractéristique d'un composant électrique ou d'un groupe de composants électriques du circuit électrique,
b4) des moyens de détection d'une panne (19) agencés pour détecter une panne au niveau d'un composant du circuit électrique lorsque la grandeur caractéristique mesurée relative à ce composant dépasse une valeur prédéterminée ou appartient à une gamme de valeurs prédéterminée, et
b5) des moyens d'isolation de panne (20) agencés pour inhiber le fonctionnement du composant ou du groupe de composants dans lequel une panne a été détectée afin de réduire les courants de commande en sortie du circuit électrique.

2. Système selon la revendication 1, dans lequel les moyens d'isolation de panne (20) sont intégrés au contrôleur.

3. Système selon l'une des revendications 1 ou 2, dans lequel les moyens de communication sont agencés pour communiquer à un utilisateur la présence d'une panne au niveau d'un composant du circuit électrique.

4. Système selon la revendication 3, dans lequel les moyens de communication sont agencés pour recevoir une commande d'inhibition du système de commande provenant de l'utilisateur.

5. Système selon l'une des revendications 1 à 4, dans lequel le circuit électrique comprend au moins un capteur de mesure de température (16) agencé pour mesurer la température d'un composant du circuit électrique.

6. Système selon l'une des revendications 1 à 5, dans lequel le circuit électrique comprend au moins un capteur de mesure de tension (17) agencé pour mesurer la tension aux bornes d'un composant du circuit électrique.

7. Système selon l'une des revendications 1 à 6, dans lequel le circuit électrique comprend au moins un capteur de mesure d'intensité (18) agencé pour mesurer l'intensité traversant un composant du circuit électrique.

8. Système selon l'une des revendications 1 à 6, dans lequel les moyens de commande comportent des moyens de commande de la puissance d'alimentation du moteur auxquels sont associés des moyens de mesure d'au moins une grandeur caractéristique de leur fonctionnement.

## Patentansprüche

1. System zum Steuern zumindest eines Stellglieds (6) von Kappen (2) einer Schubumkehr für ein Turbotriebwerk eines Luftfahrzeugs, folgendes umfassend:
a) zumindest ein Stellglied (6) einer Kappe (2), das von zumindest einem Elektromotor (7) angetrieben wird,
b) einen elektrischen Schaltkreis (C), folgendes umfassend:
b1) eine Leistungsstufe (13),
b2) Mittel zum Steuern des Elektromotors (7), einen Kontroller (9) umfassend, der durch Kommunikationsmittel (10) mit dem Steuersystem (12) des Luftfahrzeugs verbunden ist,
b3) eine Vielzahl von Messmitteln (16-18), die angeordnet sind, um jeweils eine charakteristische Größe einer elektrischen Komponente oder einer Gruppe von elektrischen Komponenten des elektrischen Schaltkreises zu messen,
b4) Mittel zum Erkennen einer Panne (19), die angeordnet sind, um eine Panne im Bereich einer Komponente des elektrischen Schaltkreises zu erkennen, wenn die gemessene charakteristische Größe in Bezug auf diese Komponente einen vorbestimmten Wert überschreitet, oder einer vorbestimmten Reihe an Werten angehört, und
b5) Mittel zur Pannenisolierung (20), die angeordnet sind, um den Betrieb der Komponente oder der Gruppe von Komponenten, in denen eine Panne erkannt worden ist, zu unterbinden, um die Steuerströme am Ausgang des elektrischen Schaltkreises zu verringern.

2. System nach Anspruch 1, wobei die Mittel zur Pannenisolierung (20) im Kontroller integriert sind.

3. System nach einem der Ansprüche 1 oder 2, wobei die Kommunikationsmittel angeordnet sind, um einem Benutzer die Präsenz einer Panne im Bereich einer Komponente des elektrischen Schaltkreises zu melden.

4. System nach Anspruch 3, wobei die Kommunikationsmittel angeordnet sind, um vom Benutzer einen Befehl zum Unterdrücken des Steuersystems zu empfangen.

5. System nach einem der Ansprüche 1 bis 4, wobei der elektrische Schaltkreis zumindest einen Sensor zum Messen der Temperatur (16) umfasst, der angeordnet ist, um die Temperatur einer Komponente des elektrischen Schaltkreises zu messen.

6. System nach einem der Ansprüche 1 bis 5, wobei der elektrische Schaltkreis zumindest einen Sensor zum Messen der Spannung (17) umfasst, der angeordnet ist, um an den Klemmen einer Komponente des elektrischen Schaltkreises die Spannung zu messen.

7. System nach einem der Ansprüche 1 bis 6, wobei der elektrische Schaltkreis zumindest einen Sensor zum Messen der Stromstärke (18) umfasst, der angeordnet ist, um die Stromstärke zu messen, die durch eine Komponente des elektrischen Schaltkreises fließt.

8. System nach einem der Ansprüche 1 bis 6, wobei die Steuermittel Mittel zum Steuern der Versorgungsleistung des Motors umfassen, denen Messmittel für zumindest eine charakteristische Betriebsgröße zugeordnet sind.

## Claims

1. A system for controlling at least an actuator (6) of cowls (2) of a thrust reverser for a turbojet engine of an aircraft comprising :
a) at least one cowl (2) actuator (6) driven by at least one electric motor (7),
b) an electric circuit (C) comprising :
b1) a power stage (13),
b2) means for controlling the electric motor (7) comprising a controller (9) being connected by communication means (10) to the control system (12) of the aircraft,
b3) a plurality of measuring means (16-18) arranged to measure respectively a characteristic quantity of an electric component or a set of electric components of the electric circuit,
b4) failure detection means (19) arranged to detect a failure at a component of the electric circuit when the measured characteristic quantity relative to this component exceeds a predetermined value or belongs to a range of predetermined values, and
b5) failure isolation means (20) arranged to inhibit the operation of the component or the set of components in which a failure has been detected in order to reduce the control currents at the output of the electric circuit.

2. The system according to claim 1, wherein the failure isolation means (20) are integrated to the controller.

3. The system according to any of claims 1 or 2, wherein the communication means are arranged to communicate to a user the presence of a failure at a component of the electric circuit.

4. The system according to claim 3, wherein the communication means are arranged to receive a command for inhibiting the control system from the user.

5. The system according to any of claims 1 to 4, wherein the electric circuit comprises at least one sensor (16) for measuring temperature arranged to measure the temperature of a component of the electric circuit.

6. The system according to any of claims 1 to 5, wherein the electric circuit comprises at least one sensor (17) for measuring voltage arranged to measure the voltage at the terminals of a component of the electric circuit.

7. The system according to any of claims 1 to 6, wherein the electric circuit comprises at least one sensor (18) for measuring intensity arranged to measure the intensity passing through a component of the electric circuit.

8. The system according to any of claims 1 to 6, wherein the control means include means for controlling the supply power of the motor, to which there are associated means for measuring at least one characteristic quantity of their operation.
